# EUROPEAN PATENT APPLICATION

(11) **EP 4 512 251 A1**
(43) Date of publication of application: **26.02.2025**
(21) Application number: 23382866.4
(22) Date of filing: 23.08.2023
(51) Int. Cl.: A23K 10/30, A23K 20/10, A23K 20/105, A23K 20/158, A23K 20/195, A23K 20/20, A23K 50/15

(54) **RUMINANT FEED ADDITIVE COMPOSITIONS HAVING METHANE INHIBITION PROPERTIES**

(71) Applicant: Yara International ASA, 0277 Oslo (NO)
(72) Inventor: COLPAERT, Filip, B-9052 Zwijnaarde (BE); RUIZ, Isabel, E-28806 Alcalá de Henares, Madrid (ES); MARTíNEZ-LUENGAS, Inés, E-28223 Pozuelo de Alarcón, Madrid (ES); VAN BELZEN, Ruud, NL-4541 HJ Terneuzen (NL); PIRRO, Laura, NL-4541 HJ Terneuzen (NL)
(74) Representative: ABG Intellectual Property Law, S.L.

(57) **Abstract**

The present disclosure relates to ruminant feed additive composition comprising a combination of urea, biuret and N-containing by-products of the biuret production out of urea, and optionally one or more nitrate compounds, to inhibit methane production emanating from the activities of the digestive tract of ruminant animals, the composition comprising one or more other methane inhibition compounds, more in particular chosen out of the group consisting of halogenated methane analogues in the form of halogenated aliphatic compounds with 1 or 2 carbons (also called C₁-C₂ hydrocarbons) and halocarbon compounds, nitro compounds, plant secondary metabolites (PSM), seaweed, algae, lichen, and/or fungi, dietary lipid and/or fatty acids, The present disclosure further relates to the use of such a ruminant feed additive composition to inhibit methane emissions from digestive activities of ruminant animals and additionally mitigate the amount of nitrous oxide (N₂O) and ammonia (NH₄) in the urine of the ruminant animal. The present disclosure also relates to a method for inhibiting the production of methane emanating from the digestive activities of ruminant animals, wherein the method comprises the step of orally administering to the ruminant animal an effective amount of such a ruminant feed additive composition.

## Description

### Technical field

The present disclosure relates to ruminant feed additive compositions having methane inhibition properties. The present disclosure more specifically relates to such ruminant feed additive compositions comprising urea, biuret and N-containing compounds produced out of the condensation reaction of urea to produce biuret, and one or more nitrate compounds, as well as other methane inhibition compounds.

### Background

Livestock production is responsible for environmental burdens participating in around 15 - 18 % of global emissions of greenhouse gases (GHGs), especially methane (CH₄) and nitrous oxide (N₂O). Amongst these, methane (CH₄) is the second most important greenhouse gas - having a global warming potential of 25 to 28 times to that of carbon dioxide (CO₂) and a longer residence time in the atmosphere - and contributes up to 40 % of the GHG emissions of the livestock. Enteric methane emissions in ruminant animals, wherein the methane is produced via fermentation of feeds in the rumen and the lower digestive track by methanogenic archaea, represents a loss of 2 % to 12 % of the gross energy of feeds and contributes to GHG-effects. Globally, about 80 million tons of methane is produced annually from enteric fermentation mainly from ruminant animals.

Ruminal methane emissions not only pollute the environment and negatively impact the greenhouse effect, but are also responsible for animal energy losses and low production efficiency, or in other words reduces the efficiency of the nutrient utilization by the ruminant animals. Consequently, there is a need to find ways to inhibit (reduce / mitigate) the methane emissions emanating from the activities of the digestive tract of ruminant animals.

At present, already numerous ruminal methane inhibition technologies have been explored. One of them is dietary manipulation to inhibit rumen fermentation and methanogenesis to preserve the environment and to increase the overall feed efficiency and the efficacy of energy utilization, resulting in making livestock production sustainable and more profitable.

The goal of the present disclosure is to provide a ruminant feed additive composition that, in addition to reducing methane emission, also contributes as a dietary non-protein nitrogen (NPN)-source for ruminant animals providing extra nutritional value for them.

### Summary

According to a first aspect of the present disclosure, a ruminant feed additive composition comprising a combination of urea, biuret and N-containing by-products of the biuret production out of urea, and optionally one or more nitrate compounds, to inhibit (mitigate / reduce) methane production emanating from the activities of the digestive tract of ruminant animals, the ruminant feed additive composition comprising one or more other methane inhibition compounds, more in particular chosen out of the group consisting of
- halogenated methane analogues in the form of halogenated aliphatic compounds (CAS with 1 or 2 carbons (also called C₁-C₂ hydrocarbons) and halocarbon compounds,
- nitro compounds,
- plant secondary metabolites (PSM),
- seaweed, algae, lichen, and/or fungi,
- dietary lipid and/or fatty acids,
or any mixture thereof.

The advantage thereof is that the mixture of urea, biuret and N-containing by-products of the biuret production out of urea is believed to be a methane inhibitor of methane emanating from the activities of the digestive tract of ruminant animals as such, and at the same time is a dietary non-protein nitrogen (NPN)-source for ruminant animals providing extra nutritional value for them, and the other methane inhibition compounds. Still an additional methane inhibition effect can be obtained by the one or more nitrate compounds,

According to a second related aspect of the present disclosure, the use of a ruminant feed additive composition according to the present disclosure to inhibit methane emissions from digestive activities of ruminant animals are described. An additional use of the ruminant feed additive composition according to the present disclosure to mitigate the amount of nitrous oxide (N₂O) and ammonia (NH₄) in the urine of the ruminant may be obtained.

According to a third aspect of the present disclosure, a method for inhibiting the production of methane emanating from the digestive activities of ruminant animals is described, wherein the method comprises the step of orally administering to the ruminant animal an effective amount of a ruminant feed additive composition comprising urea, biuret and N-containing by-products of the biuret production out of urea, optionally one or more nitrate compounds, and one or more other methane inhibition compounds, more in particular chosen out of the group consisting of
- halogenated methane analogues in the form of halogenated aliphatic compounds with 1 or 2 carbons (also called C₁-C₂ hydrocarbons) and halocarbon compounds,
- nitro compounds,
- plant secondary metabolites (PSM),
- seaweed, algae, lichen, and/or fungi,
- dietary lipid and/or fatty acids,
or any mixture thereof.

### Detailed description

The present disclosure in general relates to a dietary intervention on ruminant animals to mediate rumen fermentation and methanogenesis. After the process of taking up food into the ruminant animal, the nutrients in the feed, i.e. proteins, lipids and carbohydrates, are degraded by rumen microorganisms to produce hydrogen (H₂) and primary fermentation products that contain methyl groups such as formic acid, acetic acid, methanol and methylamine. Thereafter, methanogens convert the primary fermentation product into methane at the same time obtaining energy.

It is commonly known that there are three pathways of ruminal methane production, i.e.
(1) the CO₂-H₂ reduction pathway;
(2) synthetic pathways using short-chain fatty acids such as formic acid, acetic acid and butyric acid as substrates, and
(3) synthesis pathway using methyl compounds such as methanol and ethanol as substrates.
Of these three, the first route is the primary pathway since the growth rates of the bacteria *Methanococcus* that exploit acetic acid are low and acetic acid-producing bacteria have a low affinity for H₂. Furthermore, only methanogens of the bacteria *Methanosphaera* use methanol to produce methane.

The present disclosure specifically relates to a ruminant feed additive composition comprising urea, biuret and N-containing compounds produced during the condensation process from urea to biuret, and optionally one or more nitrate compounds, to inhibit the production of methane, and further comprising one or more other methane inhibition compounds (also called anti-methanogenic agents), which are substances or compositions which reduce the production of methane from a ruminant animal. The term `ruminant feed additive composition' as used herein means any preparation, mixture or composition suitable for, or intended for oral intake by a ruminant animal. This ruminant feed additive composition can be added to ruminant feed, for example but without being limited to forage (grass, legumes, silage), hay, grass, grain as well as soy.

The term `ruminant animal' as used herein is a mammal of the order *Artiodactyla* that digests plant-based food by initially softening it within the animal's first stomach, known as the rumen, then regurgitating the semi-digested mass, now known as cud, and chewing it again. The process of again chewing the cud to further break down plant matter and stimulate digestion is called "ruminating". Ruminant animals include amongst others cattle including domestic cattle and production cattle including dairy cows and beef cattle, sheeps, lambs, goats, giraffes, American Bison, European bison, yaks, water buffalo, deer, camels, alpacas, llamas, wildebeest, antelope, pronghom, and nilgai.

The term `urea condensation process' as used herein is a process comprising the heating of urea. In particular, when urea is heated, starting from a temperature of around 132 °C - 133 °C, urea is converted into biuret, and, in addition, so-called "by-products" in the form of N-containing compounds are formed. In some embodiments, the N-containing compounds that are formed during the condensation process of urea are ammelide, cyanuric acid and triuret, which are poorly hydrolysed in the rumen. Cyanuric acid and triuret are, just like biuret, non-toxic for the ruminant animals and give as good nitrogen retention figures as biuret does. Ammelide is an unavoidable by-product in the production of the necessary amount of biuret. The amount of ammelide however needs to be limited since it can be toxic in higher doses.

Ammelide is the compound with the chemical formula: C₃H₄N₄O₂, and CAS number: 645-93-2, cyanuric acid is the compound with the chemical formula: C₃H₃N₃O₃, and CAS number: 108-80-5; and triuret is the compound with the chemical formula: C₃H₆N₄O₃, and CAS number: 556-99-0.

In some embodiments, the ruminant feed additive composition according to the present disclosure comprises from 60 wt.% to 95 wt.% of urea and biuret in total, and from 2 wt.% to 30 wt.% of N-containing by-products, based on the total weight of the composition.

In some embodiments, the ruminant feed additive composition according to the present disclosure comprises from 30 wt.% to 60 wt.%, or from 35 wt. to 55 wt.% of urea, and from 30 wt.% to 60 wt.%, or from 35 wt.% to 55 wt.% of biuret, and from 5 wt.% to 30 wt.%, or from 5 wt.% to 20 wt.%, or from 6 wt.% to 16 wt.% of N-containing by-products produced during a urea condensation process, based on the total weight of the composition. In some embodiments, the composition comprises from 35 wt.% to 55 wt.% of urea and from 35 wt.% to 50 wt.% of biuret, from 37 wt.% to 52 wt.% or from 40 wt.% to 50 wt.% of urea and from 39 wt.% and 46 wt.% or from 40 wt.% to 45 wt.% of biuret, with wt.% based on the total weight of the ruminant feed additive composition.

In some embodiments, the ruminant feed additive composition according to the present disclosure further comprises
- from 2.5 wt.% to 8 wt.%, or from 3 wt.% to 6 wt.% of triuret;
- from 0.1 wt.% to 5 wt.%, or from 0.5 wt.% to 3 wt.%, or from 0.8 wt.% to 2 wt.% of ammelide; and
- from 2.5 wt.% to 15 wt.%, from 3 wt.% to 10 wt.%, or from 5 wt.% to 8 wt.% of cyanuric acid,
with wt.% based on the total weight of the ruminant feed additive composition.

In some embodiments, the ruminant feed additive composition according to the present disclosure further comprises from 0.1 wt.% to 4.5 wt.%, or from 0.2 wt.% to 2.5 wt.% of moisture (H₂O), based on the total weight of the ruminant feed additive composition.

In some embodiments, the ruminant feed additive composition according to the present disclosure comprises one or more anti-caking agents as generally known in the art can be added to the ruminant feed additive composition, either incorporated in the feed additive, either as a coating, to improve handling properties and to improve the quality of the ruminant feed additive composition.

The ruminant feed additive composition may further comprise one or more nitrate compounds. Nitrate-N (NO₃⁻-N), which is a N-containing compound and which is a possible substitute for urea, is not only able to meet the requirements of rumen microorganisms for ammonia-N, but it also substantially decreases the methane production by the ruminant animal. Nitrates decrease methane production by the competitive effects of nitrate-N over hydrogen (H₂) consumption and the inhibitory effect of the generated reduction intermediates, nitrite (NO₂⁻) and nitrous oxide (N₂O), which directly inhibit methanogens as well as some H₂ producers. They thus inhibit the proliferation of methanogens and reduce their activity and the large quantity of them. Nitrates are thus electron acceptors which serve as alternative electron sinks.

However, while nitrates are not toxic to methanogens, they are toxic to protozoa, fungi and to a lesser extent to a selection of bacterial species. It is consequently necessary to control the dosage of nitrate in the ruminant feed to minimize the toxicity of the generated reduction intermediate nitrite. Furthermore, it has been suggested that the risk of ruminal nitrite accumulation may be mitigated by the co-supplementation of nitrate with prebiotic substrates or nitrite-reducing bacteria, resulting in enhanced rates in the conversion, and thus detoxification, of nitrite to ammonia.

Typically, 1 % NO₃ is added to the diet dry matter to reduce methane production for ruminant animals.

In case the rumen feed additive composition according to the present disclosure comprises one or more nitrate compounds, in some embodiments the ruminant feed additive composition comprises
- from 5 wt.% to 60 wt.%, or from 20 wt.% to 40 wt.% of urea;
- from 2 wt.% to 60 wt.%, or from 20 wt.% to 40 wt.% of biuret;
- from 2 wt.% to 15 wt.% of N-containing compounds produced during the urea condensation process; and
- from 0.1 wt.% to 50 wt.%, from 21 wt.% to 37 wt.%, or from 23.5 wt.% to 31.5 wt.% of one or more nitrate compounds,
with wt.% based on the total weight of the ruminant feed additive composition.
In some embodiments, the rumen feed additive composition according to the present disclosure comprises
- from 20 wt.% to 55 wt.%, or from 35 wt.% to 55 wt.% of urea;
- from 20 wt.% to 50 wt.%, or from 35 wt.% to 50 wt.% of biuret;
- from 5 wt.% to 30 wt.% of N-containing compounds produced during the urea condensation process; and
- from 0.5 wt.% to 5 wt.% of one or more nitrate compounds,
with wt.% based on the total weight of the ruminant feed additive composition.

In some embodiments, the one or more nitrate compounds are water-soluble nitrate salts chosen out of the group consisting of are calcium nitrate, magnesium nitrate, ammonium nitrate, potassium nitrate, sodium nitrate or any combination / mixture of two or more of these.

In some embodiments, the ruminant feed additive composition comprises from 20 wt.% to 32 wt.% of calcium nitrate and from 1 wt.% to 5 wt.% of ammonium nitrate, or from 22 wt.% to 29 wt.% of calcium nitrate and from 1.5 wt.% to 3.0 wt.% or from 1.5 wt.% to 2.5 wt.% of ammonium nitrate, with wt.% based on the total weight of the ruminant feed additive composition.

It is remarked that the amount of the one or more nitrate compounds and the type thereof must be such that these are not toxic to the ruminant.

The ruminant feed additive composition according to the present disclosure further comprises one or more other methane inhibition compounds. With "other" is meant different ones than urea and biuret, which is believed to already have a methane inhibiting effect as such and furthermore serve as a dietary non-protein nitrogen (NPN)-source for the ruminant animals, and different ones then the one or more nitrate compounds. The term "methane inhibition compound" as used herein relates to all compounds suitable to inhibit / reduce / mitigate methane emissions in ruminant animals, i.e. rumen methane inhibition compounds. The amount of these methane inhibition compounds which is added to the ruminant feed additive composition according to the present disclosure is different for the different categories as listed below.

Among these methane inhibition compounds, the ones that inhibit the growth or the metabolic activity of methanogens are the ones with the very effective approaches. Others modulate the rumen microbiome such that the fermentation is shifted toward decreasing H₂-production and increasing the production of reduced volatile fatty acids (VFA) such as propionate.

In some embodiments, the ruminant feed additive composition comprises halogenated methane analogues in the form of halogenated aliphatic compounds with 1 or 2 carbons (also called C₁-C₂ hydrocarbons) and halocarbon compounds, which are a class of chemical compounds which continuously reduce CH₄ production without adversely affecting animal growth or development. In organic chemistry, a hydrocarbon is a compound consisting only of carbon and hydrogen atoms while a halocarbon is any compound formally derived from a hydrocarbon by replacing at least one hydrogen atom with a halogen, optionally replacing all hydrogen atoms with halogens. The hydrogen atoms can independently be replaced by halogens selected from the group consisting of fluorine (chemical formula F₂), chlorine (chemical formula Ch), bromine (chemical formula Br₂) or iodine (chemical formula I₂) The term "halocarbon compound" also includes halogen-containing reaction products of halocarbon compounds.

These halogenated methane analogues are typically added in an amount of less than 5 wt.% of dry matter of the diet.

In some embodiments of a ruminant feed additive composition according to the present disclosure, the halocarbon compounds can be selected out of the group consisting of chlorinated and brominated methane analogues including chloroform (chemical formula: CHCl₃ and CAS number: 67-66-3), carbon tetrachloride (chemical formula: CCl₄ and CAS number: 56-23-5), chloral hydrate (chemical formula C₂H₃Cl₃O₂ and CAS number: 302-17-0), methylene chloride (chemical formula CH₃Cl and CAS number: 75-09-2), bromochloromethane (BCM) (chemical formula CH₂BrCl and CAS number: 74-97-5), bromoform (chemical formula CHBr₃ and CAS number: 75-25-2), bromodichloromethane (chemical formula CHBrCl₂ and CAS number: 75-27-4), dibromochloromethane (chemical formula CHBr₂Cl and CAS number: 124-48-1), bromochloroacetic acid (chemical formula C₂H₂BrClO₂ and CAS number: 5589-96-8), dibromoacetic acid (chemical formula C₂H₂Br₂O₂ and CAS number: 631-64-1), trichloroacetamide (chemical formula CHClNO and CAS number: 594-65-0), trichloroethyladipate (chemical formula ClDC=CCl₂), and iodopropane (chemical formula C₃H₇I and CAS number: 107-08-4), or any mixtures thereof.

In the rumen, chloral hydrate is converted to chloroform prior to inhibiting methanogens. Bromochloromethane is believed to inhibit methane production by reacting with a reduced from of Vitamin B₁₂ which inhibits methanogenesis.

In Mc Crabb, et al, 1997, Inhibiting methane production in Brahman cattle by dietary supplementation with a novel compound and the effects on growth, Australian Journal of Agricultural Research, 48, p. 323 - 329, a chemical complex of bromochloromethane, as an anti-methanogenic compound, and α-cyclodextrin, which is chemically stable when added to feed, thus overcoming the highly volatile nature of bromochloromethane, was found to be capable of suppressing CH₄ emissions in ruminant animals over a prolonged period.

The commercial product Rumin8 of the company Rumin8 is a blend of highly soluble dairy sugars and organic acids that enhance microbial activity improving energy and protein availability in ruminant. WO 2023/010170, filed in the name of Rumin8, describes a composition for inhibiting methanogenesis in ruminant animals, comprising a halocarbon compound and one or more stabilising agents. The composition does not comprise red marine macroalgae or a halocarbon producing recombinant yeast, and is not an extract of one of those, nor chloroform, carbon tetrachloride, methylene chloride, hexachloroethane, bromochloromethane, bromochloropropane, halothane, 2-bromoethane sulphonate, or 2-bromo-2-chloroethane sulphonate. The halocarbon compound is bromoform which is stabilised in terms of having reduced volatility in the composition, compared to the volatility observed in the isolated halocarbon.

It is remarked that certain halogenated aliphatic hydrocarbons are banned from commercial use in a number of countries because they for instance deplete ozone and they are potentially toxic to ruminant animals and humans. Chloroform for instance can give problems since it is a recognized carcinogen and it inhibits homoacetogenic bacteria and acetate-consuming sulphate-reducing bacteria, which are two groups of bacteria which do not have a major role under normal dietary conditions, but can be important when methanogens are inhibited.

In some embodiments, the ruminant feed additive composition according to the present disclosure comprises one or more nitro compounds, which are another class of N-containing chemical compounds that can lower ruminal methane production without adversely affecting the growth and the development of the ruminant animal. Nitro compounds, are classified into aromatic compounds containing nitro groups in the aromatic ring and aliphatic-aromatic compounds containing nitro groups only in the aliphatic side chain.

These nitro-compounds are typically added in an amount of less than 5 wt.% of dry matter of the diet.

In some embodiments, the ruminant feed additive composition according to the present disclosure comprises one or more nitro compounds selected out of the group consisting of nitroethane (NE) (chemical formula C₂H₅NO₂ and CAS number: 79-24-3), 2-nitroethanol (NEOH) (chemical formula C₂H₅NO₃ and CAS number: 625-48-9), 2-nitro-1-propanol (NPOH) (chemical formula C₃H₇NO₃ and CAS number:2902-96-7), 3-nitrooxypropanol (3-NOP) (chemical formula C₃H₇NO₄ and CAS number: 100502-66-7), ethyl-3-nitrooxy propionate (chemical formula C₅H₉NO₅ and CAS number: 100550-00-3), methyl-3-nitrooxy propionate (chemical formula C₄H₇NO₅ and CAS number: 130432-35-8), and 3-nitrooxy propionic acid (chemical formula C₃H₆O₃ and CAS number: 6487-38-3), or any mixtures thereof. These compounds inhibit the activity of methanogenic bacteria, they significantly reduce the expression of the methyl coenzyme M reductase gene which is associated with the last step of CH₄ production and they reduce the content of coenzyme (also called cofactor) F420 and F430. Coenzyme F420 (or 8-hydroxy-5-deazaflavin) is a coenzyme involved in redox reactions in methanogens. Coenzyme F430 is the coenzyme of the enzyme methyl coenzyme M reductase (MCR) which catalyses the reaction that releases methane in the final step of the methanogenesis.

3-NOP is typically dosed in an amount of 100 ppm per kg dry matter intake (DMI).

The nitrocompounds as listed above are added in an amount of 10 mmol/L NE, NEOH and NPOH leads to 96.7 % (NE), 96.7 % (NEOH) and respectively 41.7 % (NPOH) methane suppression.

In US2020229465A1, 1 mg to 10 g per kg feed of 3-nitrooxypropanol (3-NOP), ethyl-3-nitrooxy propionate, methyl-3-nitrooxy propionate, and 3-nitrooxy propionic acid reduced at least 10 % of the methane production in ruminant animals when measured in metabolic chambers.

The commercial product Bovaer^{®} of the company DSM is a feed supplement that in ruminant animals suppresses the enzyme which combines released hydrogen and carbon dioxide to form methane, so less methane gets generated.

In WO 2022/218965 in the name of DSM IP Assets, a combination of 3-NOP and gossypol is disclosed as a synergistic combination to reduce methane formation in ruminant animals. Gossypol is a natural phenolderived from the cotton plant (genus Gossypium). The 3-NOP is administered to the ruminant in an amount selected in the range from 0.05 g / animal / day to 5 g / animal / day, or from 0.1 to 4 g/ animal/ day, or from 0.25 to 3 g / animal/ day and gossypol is administered to the ruminant in an amount selected in the range from 0.05 to 100 g / animal / day, or from 0.1 to 50 g / animal / day, or from 0.2 to 25 g / animal / day. The molar ratio of gossypol to 3-NOP is comprised from 100 to 0.1, or from 75 to 0.25, or from 60 to 0.35, or from 50 to 0.5.

In WO 2022/218967 in the name of DSM IP Assets, a combination of gossypol and a methane inhibitor are administered to a ruminant animal for reducing the production of methane emanating from the digestive activities of the ruminant animal. Gossypol is administered to the ruminant in an amount from 0.1 g to 50 g / animal / day, or from 0.2 to 25 g / animal / day. The methane inhibitor is administered to the ruminant animal in an amount from 0.01 and 50 g, or from 0.01 to 25 g / animal / day. The molar ratio of gossypol to the methane inhibitor is comprised from 100 to 0.1, or from 75 to 0.25, or from 60 to 0.35, or from 50 to 0.5. The methane inhibitor is more in particular selected from the group consisting of eugenol, tannic acid, allicin, bromoform, chloroform and propanediol mononitrate.

In some embodiments of a ruminant feed additive composition according to the present disclosure, the composition comprises one or more plant secondary metabolites (PSM), which are small molecules produced by plants that are not directly involved in the development, normal growth, and reproduction thereof. Many phytochemicals, which are biologically active compounds that occur naturally in plants as secondary metabolites.

In certain embodiments, the PSMs are chosen out of the group consisting of saponins, tannins, flavonoids, essential oils and organosulphur compounds, or any mixtures thereof. These are all originating from a wide range of plant sources, and are good candidates for methane reduction and mitigation options. All these compounds have anti-microbial activities against several types of organisms. The efficacy of these PSMs in mitigating or reducing methane production in ruminant animals varies considerably depending on the type, source, molecular weight, dose as well as ruminant diet type. These PSMs lessen methane production through a direct effect on methanogens and / or the elimination of protozoa, reduction of organic matter digestion, and modification of fermentation in the rumen.

Some forage plants rich in tannins and saponins have shown a methane mitigating effect on ruminant animals. Tannins belong to a subclass of plant polyphenols. Different sources of tannin extracts are able to decrease methane production, depending upon the dose thereof. They have the capacity to reduce methane synthesis in the rumen directly or indirectly by either inhibiting methanogens or protozoal population, respectively. A methanol extract of pericarp of *Terminalia chebula,* which is a tropical fruit, for instance, when fed in sheep with an amount of 10/kg dry matter intake, inhibited methane production. Saponins are high molecular weight glycosides, with a sugar linked to a hydrophobic aglycone. Their main biological effect is on cell membranes. They are toxic to protozoa and it has been suggested the methanogenic archaea are symbiotically associated to rumen protozoa, lowering the production of H₂ and decreasing the abundance of protozoa-associated methanogens.

Typical doses of tannin that are added to the ruminant feed is less than 40 g / kg of dry matter. Higher doses can inhibit feed intake and dry matter ingestibility.

An inclusion level of saponin of less than or equal to 0.5 wt.% of dry matter intake for maximum methane mitigation and to avoid adverse impacts on digestibility.

Flavonoid is a secondary metabolite with a C₃-C₃-C₆ skeleton and which are derivatives of benzo-L-pyrone which are found in seeds and vegetables. Flavonoids include amongst others flavone, poncirin, neohesperidin, myricetin, naringin, rutin, quercetin and kaempferol. It has been reported that these decrease in-vitro methane production by 5 to 9 mL/g dry matter. All the flavonoids noticeably decrease relative abundances of hydrogenotrophic methanogens when fed at an amount of 0.2 g/kg dry matter. Flavonoids directly inhibit methanogens and it is assumed that they act as H₂-sinks via cleavage of ring structure and reductive dihydroxylation.

Essential oils (EO) are aromatic compounds largely volatile and which are produced in special cells in different parts of the plants, including roots, seeds, fruit, leaves, flowers, bark, petals and stems. The effect of essential oils on methane production and methanogens vary depending upon dose, type and the ruminant diet. Essential oils directly or indirectly inhibit methanogens via inhibition of protozoa and H₂-producing bacteria in the rumen. Essential oils can be derived from all types of plants such as cinnamon, lemongrass, ginger, garlic, juniper berries, eucalyptus, thyme, citrus, oregano, mint, rosemary and coriander. Citrus essential oils such as (d-)limonene mitigate methane emissions by reducing microbial adaptation.

The commercial product Agolin^{®} produced by Biere in Switzerland, for instance, contains a blend of the following essential oils: eugenol (up to 7 wt.%), geranyl acetate (up to 7 wt.%) and coriander seed oil (up to 10 wt.%). Typical amounts of Agolin added to the ruminant feed is 1 g / day / cow.

In WO 2022/18966 in the name of DSM IP Assets, a combination of (d-) limonene and propanediol mononitrate (PDMN) (chemical formula C₃H₇NO₄ and CAS-number: 100502-66-7) are used for reducing the formation of methane emanating from the digestive activities of ruminant animals. The limonene is administered to the ruminant in an amount of between 0.05 to 100g / animal / day, or from 0.1 and 50 g / animal / day, or from 0.2 and 25 g / animal / day. The propanediol mononitrate is administered to the ruminant in an amount of from 0.05 to 5 g / animal / day, or from 0.1 to 4 g / animal / day, or from 0.25 to3 g / animal / day. The molar ratio of limonene to propanediol mononitrate is comprised from 100 to 1, or from 75 to 1, or from 60 to 5, or from 25 to 5.

In certain embodiments of a ruminant feed additive composition according to the present disclosure, the composition comprises one or more organosulfur compounds. Organosulfur compounds are organic compounds that contain sulphur and that can be derived both from plant and animal sources. Organosulfur compounds from plant sources are found in allium vegetables such as garlic, onions, shallot, leek, chives, cabbage, cauliflower, Brussels sprouts, kale, rucola (rocket salad), etc. Organosulfur compounds from animal sources can be found in meat, eggs and fish.

In certain embodiments of a ruminant feed additive composition according to the present disclosure, the organosulphur compounds are selected from the group consisting of thioethers (chemical formula R-S-R', wherein R and R' are organic groups), thioesters (chemical formula R-C(=O)-S-R', wherein R and R' are organic groups), thioacetals (chemical formula R-CH (-SR')₂ for symmetric dithioacetals and R-CH (-SR')-SR" for asymmetric dithioacetals, wherein R and R' are organic groups), thiols (chemical formula R-SH, wherein R is an organic group), disulfides (chemical formula R-S-S-R', wherein R and R' are organic groups), polysulfides (chemical formula RSₓR', wherein R and R' are organic groups and x indicates the number of sulfur atoms), sulfoxides (chemical formula R-S(=O)-R', wherein R and R' are organic groups), sulfones (chemical formula R-S(=O)(=O)-R', wherein R and R' are organic groups), thiosulfinates (chemical formula RS(=O)(=O)SR', wherein R and R' are organic groups), sulfimides (or sulfilimine), sulfoximides (or sulfoximine), sulfonediimines (chemical formula RS(=NR')₂R", wherein R, R' and R" are organic groups), thioketones (chemical formula R₂C=S, wherein R is an organic group), thioaldehydes (chemical formula RCHS, wherein R is an organic group), sulfines (or thione S-oxides, chemical formula XY=SO), sulfenes (chemical formula R₂C=SO₂, wherein R is an organic group), thiocarboxylic acids (including dithiocarboxylic acids) (or carbothioic acids, chemical formula thione form (RC(S)OH) and thiol form (RC(O)SH), wherein R is an organic group), sulfonic acids (chemical formula R-S(=O)₂-OH, wherein R is an organic alkyl or aryl group), sulfinic acids (chemical formula RSO₂H), wherein R is an organic group), sulfenic acids (chemical formula R-S-OH, wherein R is an organic group), sulfonic esters (or sulfonate, chemical formula R-S(=O)₂-OR', wherein R and R' are organic groups), sulfinic esters (chemical formula RSO₂OR', wherein R and R' are organic groups), sulfenic esters (chemical formula RSO₂R', wherein R and R' are organic groups), sulfonic amides (or sulfonamide, chemical formula R-S(=O)₂-NR', wherein R and R' are organic groups), sulfinic amides (or sulfilamide, chemical formula RSO₂ONR'), sulfonium compounds (chemical formula sulfonium ion (CH₃)₃S⁺), oxosulfonium compounds (chemical formula oxosulfonium ion [R₃S=O]⁺), sulfonium ylides (an ylide is a neutral dipolar molecule containing a formally negatively charged atom (usually a carbanion) directly attached to a heteroatom with a formal positive charge (usually nitrogen, phosphorus or sulfur), and in which both atoms have full octets of electrons), oxsulfonium ylides, thiocarbonyl ylides, sulfuranes (chemical formula SR₄, wherein R is an organic group) and persulfuranes (chemical formula SR₆, wherein R is an organic group), and any mixture thereof. More specifically, the organosulphur compounds are chosen out of the group consisting of allicin (chemical formula C₆H₁₀OS₂, CAS-number: 539-86-6), ajoene (chemical formula C₉H₁₄OS₃, CAS-number: 92285-01-3), alliin (chemical formula C₆H₁₁NO₃S, CAS-number: 556-27-4), allypropyl disulfide (chemical formula C₃H₅S₂C₃H₇, CAS-number: 2179-59-1), diallyl trisulfide (chemical formula C₆H₁₀S₃, CAS-number: 2050-87-5), or any mixtures thereof.

WO 2021/005202, filed in the name of Mootral, for instance discloses an animal feed supplement comprising at least one organosulfur compound and at least one essential oil and/or at least one component of an essential oil. In a certain embodiment, the at least one organosulfur compound is or allicin, which is an organosulfur compound obtained from garlic when tissue damage of garlic occurs. In certain embodiments, the at least one essential oil and/or the at least one component of an essential oil is selected from the group of oils consisting of coriander oil, nutmeg oil, wild carrot oil, pine oil, clove oil, any combination thereof, and/or any component and/or any combination of components thereof. Another possibility of at least one component of an essential oil is selected from bornyl acetate, geranyl acetate, eugenol, linalool, geraniol, neryl acetate, and any combination thereof. The animal feed supplement can further comprise a bioflavonoid, which is a class of plant and fungus secondary metabolite having a general structure of a 15-carbon skeleton consisting of two phenyl rings and a heterocyclic ring. The commercial product of Mootral, Mootral Ruminant, is a natural feed supplement showing in vivo up to 38% reduction of enteric methane emissions, this depending on the animal breed, the age, the farm conditions and the feed regime of the ruminant animals. It exists out of a combination of garlic and citrus extract in a pellet form.

Typical amounts of Mootral added to the ruminant feed is 10 - 15 g / day / cow.

In some embodiments of a ruminant feed additive composition according to the present disclosure, the composition comprises seaweed, algae, lichen and fungi.

Seaweed, otherwise known as macroalgae, is a common name for many species of marine plants and algae that grow in saltwater or fresh water, and are primitive non-flowering photosynthetic macrophytes. They can be of many different morphologies, sizes, colours and chemical profiles. Seaweed can be red, green, or brown. Algae are organisms that have chlorophyll and other pigments and can produce oxygen through photosynthesis. They are found in fresh or salt water or moist ground. A lichen is a composite organism that arises from algae or cyanobacteria living among filaments of multiple fungi species in a mutualistic relationship. A fungus is any member of the group of eukaryotic organisms that includes microorganisms such as yeasts, molds, and mushrooms. All these species may contain high concentrations of organobromine compounds such as bromomethane and bromoform, and thus may have a methane mitigating or reducing effect in a natural way.

Some seaweed species synthesize bioactive secondary metabolites, of which some of these are responsible for anti-methanogenic properties by manipulating the microbial populations in the rumen. Some red seaweeds are anti-methanogenic, particularly the genus *Asparagopsis,* and more in particular the subspecies *Asparagopsis taxiformis* and *Asparagopsis aramata,* when added to grass- and grain-based ruminant diets, due to their capacity to synthesize and encapsulate halogenated methane analogues such as bromoform and dibromochloromethane, within specialized gland cells as a natural defence mechanism. Red seaweed of the bacterial subspecies of the genus *Asparagopsis* need to be added to the ruminant feed additive according to the present disclosure in an amount of less than 1.0 wt.%% on organic matter basis due to reductions in dry matter intake at higher inclusion levels. Typically, between 0.2 and 0.5 wt.% *Asparagopsis* dry matter in diet dry matter is included in the ruminant feed. Additionally, inclusion levels ranging from 0.20 to 0.91 wt.% dry matter may also contribute to increased animal productivity concomitant with methane inhibition. Brown and green seaweeds contain phlorotannins, which are polymers of phloroglucinol, Supplementation of tannins at levels between 2 wt.% and 4 wt.% of dietary dry matter have positive effects in ruminant animals by amongst others reducing methane emissions by inhibiting methanogens.

Examples of commercial products made from red seaweeds *Asparagopsis taxiformis* are SeaGraze^{™} from the company Symbrosia, Brominata^{™} from the company Blue Ocean Barns and Lome^{™} from the company Volta (that recommends to fed daily dose of 100 grams to cows), which reduce methane emissions from livestock burps and farts, in this way retaining more energy from their feed instead of releasing it into the atmosphere.

CH4 Global provides Methane Tamer^{™}, which is a line of animal feed supplement formulations based on *Asparagopsis (taxiformis)* seaweed, to reduce enteric methane. Methane Tamer^{™} Beef Feedlot is their targeted formulation designed specifically for beef and dairy cattle in feedlot operations.

Number8bio, an Australian synthetic biology startup, has developed a product using microorganisms, such as yeast, which are capable of growing on greenhouse gases, and which are produced by synthetic biology and precision fermentation. These microorganisms produce bromoform and other methane inhibitors to cut methane emissions from animal agriculture.

In some embodiments, the ruminant feed composition comprises one or more dietary lipids (fats) and/or fatty acids. Lipids are a broad group of biomolecules, including fats as a type of lipids. A fatty acid is an important component of lipids in plants, animals, and microorganisms. In general, a fatty acid consists of a straight chain of an even number of carbon atoms, with hydrogen atoms along the length of the chain and at one end of the chain, and a carboxyl group (-COOH) at the other end of the chain. If the carbon-to-carbon bonds are all single, the acid is saturated. These are generally solid at room temperature. If any of the bonds is double or triple, the acid is unsaturated. These are generally liquid at room temperature. The advantage of fatty acids in the ruminant feed additive composition according to the present disclosure is that they are a nutritional alternative to depress ruminal methanogenesis without decreasing ruminal pH (as opposite to concentrates). Lipids cause a depressive effect on methane production by toxicity to methanogens, reduction of the amount of protozoa and therefore the protozoa associated methanogens. In general, it was observed that for every 1 wt.% increase in fat in the diet, on a dry matter intake DMI basis, methane expressed in g/kg DMI was reduced by between 3 % to 6 %. Addition of oils to ruminant diets may decrease CH₄ emission by up to 80 % in vitro and about 25 % in vivo. Dietary lipids and fatty acids cause a decrease in CH₄ production depending upon the levels of their supplementation, the source of the fatty acids and the type of the diet. Vegetable and animal oils have been used in ruminant animals to increase the energy density of the diets, but such oils are also very promising dietary alternatives to depress ruminal methanogenesis. The reduction in methanogenesis with lipids and oils appears to be the result of the inhibition of ruminal microbial flora, more in particular the protozoa. An example of animal oils is fish oil. Irrespective of the fat source, methane emissions expressed in gram per kilogram of dry matter intake in cattle were calculated to be reduced by 5.6 % with each 1 wt.% addition of fats on dry matter basis of the diet. It is hereby remarked that there are considerable variations in the methane reduction among fat sources.

It is however remarked that it was discovered that higher concentrations decreased production efficiency due to a reduction of feed digestion and fermentation. Furthermore, although fat inclusion in ruminant diets lowers methane emissions consistently for longer periods, it can have a negative impact on dry matter digestion, in particular of fibre components and dry matter intake, and the inclusion of high levels of fat in the diet can reduce the milk fat percentage and the daily gain or the milk yield. Consequently, care must be taken in choosing the appropriate fat sources and the amount of fat supplementation in the ruminant diet, but proper supplementation of fats and fatty acids results in ruminal methane mitigation on a consistent basis without affecting production.

In certain embodiments, the fatty acids are saturated organic fatty acids. These fatty acids are more in particular selected out of the group consisting of caproic acid (6 carbon atoms long) (CAS-number: 142-62-1), caprylic acid (8 carbon atoms long) (CAS-number: 142-07-2), capric acid (10 carbon atoms long) (CAS-number: 334-48-5), lauric acid (12 carbon atoms long) (CAS-number: 143-07-7), myristic acid (14 carbon atoms long) (CAS-number: 544-63-8), myristoleic acid (14 carbon atoms long) (CAS-number: 544-65-9), palmitic acid (16 carbon atoms long) (CAS-number: 57-10-3), palmitoleic acid (16 carbon atoms long) (CAS-number: 373-49-9), stearic acid (18 carbon atoms long) (CAS-number: 57-11-4), linoleic acid (18 carbon atoms long) (CAS-number: 60-33-3), linolenic acid (18 carbon atoms long) (CAS-number: 463-40-1), or any mixture thereof. These fatty acids can act as hydrogen sinks during their biohydrogenation, thereby lowering methane production.

With regards to lauric acid, it was seen that 30 g/kg dry matter reduces the methane to total gas ratio significantly starting from day 4 of feeding to dairy cows.

In certain embodiments, the fatty acids are unsaturated organic fatty acids. These unsaturated fatty acids are chosen out of the group consisting of propynoic acid (which is an unsaturated analogue of propionic acid) (chemical formula C₃H₆O₂, CAS number: 79-09-4), 3-butenoic acid (chemical formula CH₂CH₂CH₂COOH, CAS-number: 625-38-7) and 2-butynoic acid (which are both unsaturated analogues of butyric acid) (chemical formula C₄H₄O₂ and CAS-number: 590-93-2), and ethyl 2-butynoate (chemical formula C₆H₈O₂ and CAS-number 4341-46-8), or any mixtures thereof.

Unsaturated fatty acids have been evaluated as alternative electron sinks to lower methanogenesis in vitro in a dose of from 6 mmol/litre to 18 mmol/litre.

Euroclim^{®} produced by Dumoulin in Belgium for instance contains multiple unsaturated fatty acids originating from extruded linseed (flaxseed). Research has shown that this reduces the methane production from ruminant animals with 30 %.

In some embodiments, the ruminant feed additive composition according to the present disclosure comprises one or more vegetable oils - which are a type of lipid - which are chosen out of the group consisting of (but not limited to) canola oil, palm kernel oil, sunflower oil, soybean oil, coconut oil, linseed oil, or any mixtures thereof.

The ruminant feed additive composition according to the present disclosure may also comprise any pre-biotics, pro-biotics, post-biotics, anti-biotics, bio stimulants as known in the art for fostering / supporting the nitrogen assimilation and rumen fermentation.

Prebiotics are feed ingredients that are not easily digested by or even nondigestible for ruminant animals. These however beneficially affect the ruminant by selectively stimulating growth and/or activity of one or a limited number of bacteria in the colon, and thus improves the health of the ruminant.

Probiotics are a class of beneficial active microorganisms or their cultures. Probiotics such as yeast cultures are used to stimulate bacterial activity in the rumen. They stabilize rumen pH, increase propionate levels and decrease the amount of acetate, methane and ammonia production. There are many types of pro-biotics, and different strains have different inhibitory effects on CH₄ emissions. Most pro-biotics reduce CH₄ production by influencing the activities of ruminal microorganisms, with no adverse effects on animals. In addition, pro-biotics enhance ruminal fermentation.

In some embodiments, the anti-biotics are ionophore anti-biotics, which are carboxylic polyether antibiotics naturally produced by an occurring strain of any bacterium of the genus *Streptomyces.* Ionophores are an important tool to improve the efficiency and the performance of ruminant animals, but it has also been shown that they depress methane production in ruminant animals in a dose-dependent manner. Ionophores do not alter the quantity and diversity of methanogens, but they change the bacterial population from Gram-positive to Gram-negative organisms with an associated change in the fermentation from acetate to propionate, and thus a reduced acetate concentration. This shift in fermentation lowers the amount of hydrogen which is available for the production of methane by methanogens. Another noticeable effect of ionophores is the mitigation of ruminal proteolysis with a reduction in ammonia synthesis as a consequence. Ionophores might also reduce ruminal protozoal amounts.

In some embodiments, the ionophore antibiotics are chosen out of the group consisting of monensin, which is a polyether antibiotic isolated from *Streptomyces cinnamonensis,* lasalocid, which is a polyether antibiotic isolated from *Streptomyces lasaliensis,* narasin, which is a polyether antibiotic isolated from *Streptomyces aureofaciens* and salinomycin, which is a polyether antibiotic isolated from *Streptomyces albus,* maduramicin, which is a polyether antibiotic isolated from *Actinomadura yumaensis,* and semduramicin, which is a polyether antibiotic isolated from *Actinomadura roseorufa.*

Typical amounts of monensin added to the rumen diet is from 16 to 50 mg / kg dry matter.

It is to be remarked that ionophores are suitable for short time use only. Furthermore, the use of ionophores as feed additives is restricted and even banned in some countries as feed additives.

Bacteriocins, which are proteins or peptides produced by bacteria, inhibit select microbial species in the rumen and other environments. Examples thereof are Bovicin HC₅, a bacteriocin produced by bacteria of the genus *Streptococcus,* and Nisin, which a bacteriocin produced by *Lactobacillus lactis* subspecies *lactis.* Similar to monensin, it is accepted that bacteriocins modulate rumen fermentation leading towards increased propionate, thereby decreasing the methane production.

It is remarked that each of the methane inhibition compounds as listed above can be added individually to the ruminant feed additive composition according to the present disclosure, but can also be added in a mixture thereof.

It is further remarked that the total weight% of the different compounds of the ruminant feed additive composition as listed above and which are added in the ruminant feed additive composition is 100 wt.%.

Furthermore, it is remarked that, since some of these inhibitors are also toxic to ruminant animals, adverse effects or toxicity can be avoided by using combinations of inhibitors with complementary modes of actions at low doses to inhibit not only methanogens but also other rumen microbes (e.g., protozoa and H₂-producing bacteria) that contribute to methane production in an additive or a synergistic manner.

It is remarked that, although iodides have a methane mitigation effect, it is advisable that the ruminant feed composition according to the present disclosure is substantially free from iodides since it can be found back in subsequent animal products such as milk. Furthermore, iodides contribute to a reduction in performance through the disturbed health of adult animals and their offspring. If they are added to the ruminant feed composition as a methane inhibitory agent, the amount should be such that the iodide concentration is not increased in the meat and/ or the milk produced by the ruminant to which they are orally administered.

The ruminant feed additive composition according to the present disclosure can further comprise one or more urease and/or nitrification inhibitor compounds.

In a particular embodiment, the one or more urease and/or nitrification inhibitor compounds are added to the ruminant feed additive composition in an amount from 0.005 wt.% to 0.5 wt.%, or from 0.03 wt.% to 0.2 wt.%, with wt.% based on the dry matter intake per day per animal.

Urease inhibitor compounds are chemical compounds that block the activity of the enzyme urease. They are used to temporarily reduce the activity of the enzyme and slow the rate at which urea is hydrolyzed or in other words a urease inhibitor inhibits the hydrolytic action on urea (CH₄N₂O) by the urease enzyme, primarily targeted to reduce ammonia volatilisation. The class of compounds which is used for urease-inhibitors is called phosphoric triamide. The urease inhibitor of the type phosphoric triamide is a compound of formula 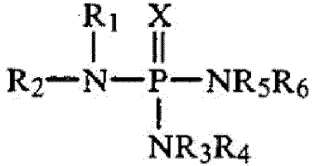 wherein :
- X is oxygen or sulphur;
- R₁ is alkyl, cycloalkenyl, aralkyl, aryl, alkenyl, alkynyl, or cycloalkyl;
- R₂ is hydrogen, alkyl, cycloalkenyl, aralkyl, aryl, alkenyl, alkynyl, or cycloalkyl, or R*1* and R*2* together may form an alkylene or alkenylene chain which may optionally include one or more heteroatoms of divalent oxygen, nitrogen or sulphur completing a 4, 5, 6, 7, or 8 membered ring system; and
- R₃, R₄, R₅ and R₆ are individually hydrogen or alkyl having 1 to 6 carbon atoms. A typical example thereof is N-(n-butyl) thiophosphoric triamide (nBTPT).

Nitrification inhibitor compounds are chemical compounds that slow the conversion of NH₄⁺ to NO₃⁻ by killing or reducing the activity of populations of *Nitrosomonas* and *Nitrococcus* bacteria. Examples of nitrification inhibitors include, but are not limited to, dicyandiamide (DCD) (chemical formula C₂H₄N₄ and CAS-number 461-58-5), 2-chloro-6-trichloromethylpyridine (nitrapyrin) (chemical formula C₆H₃CI₄N and CAS-number: 1929-82-4), dimethylpyrazole (DMP)-based compounds, such as 3,4-dimethylpyrazole phosphate (DMPP) (chemical formula C₂H₁₁N₂O₄P and CAS-number: 202842-98-6), 3,4-dimethylpyrazole succinic acid (DMPSA) (chemical formula C₉H₁₂N₂O₄ and CAS-number: 203-740-4), 3-methylpyrazole (MP) (chemical formula C₄H₆N₂ and CAS-number: 1453-58-3), 1-H-1,2,4-triazole (TZ) (chemical formula C₂H₃N₃ and CAS-number: 288-88-0), 3-methylpyrazole-1-carboxamide (CMP) (chemical formula C₅H₇N₃O and CAS-number: 873-50-7), 4-amino-1,2,4-triazole (AT, ATC) (chemical formula C₂H₄N₄ and CAS-number: 584-13-4), 3-amino-1,2,4-triazole (chemical formula C₂H₄N₄ and CAS-number: 61-82-5), 2-cyanimino-4-hydroxy-6-methylpyrimidine (CP) (chemical formula C₅H₇N₃O and CAS-number: 3977-29-5), 2-ethylpyridine (chemical formula C₇H₉N and CAS-number: 100-71-0), ammonium thiosulfate (ATS) (chemical formula (NH₄)₂S₂O₃ and CAS-number: 7783-18-8), sodium thiosulfate (ST) (chemical formula Na₂S₂O₃ and CAS-number: 7772-98-7), thiophosphoryl triamide (chemical formula C₄H₁₄N₃PS and CAS-number: 94317-64-3), thiourea (TU) (chemical formula NH₂CSNH₂ and CAS-number: 62-56-6), guanylthiourea (GTU) (chemical formula C₂H₆N₄S and CAS-number: 15989-47-6), ammonium polycarboxylate, ethylene urea (chemical formula C₃H₆N₂O and CAS-number: 120-93-4), hydroquinone (chemical formula C₆H₄(OH)₂ and CAS-number: 123-31-9), phenylacetylene (chemical formula C₆H₅CCH and CAS-number: 536-74-3), phenyl phosphoro diamidate (chemical formula C₆H₅OP(O)(NH₂)₂ and CAS-number: 7450-69-3), calcium carbide (chemical formula CaC₂ and CAS-number: 75-20-7), 5-ethoxy-3-trichloromethyl-1,2,4-thiadiazol (etridiazol; terraole) (chemical formula C₅H₅Cl₃N₂OS and CAS-number: 2593-15-9), 2-amino-4-chloro-6-methylpyrimidine (AM) (chemical formula C₅H₆CIN₃ and CAS-number: 5600-21-5), 1-mercapto-1,2,4-triazole (MT) (chemical formula C₂H₃N₃S and CAS-number: 3179-31-5), 2-mercaptobenzothiazole (MBT) (chemical formula C₇H₅NS₂ and CAS-number: 149-30-4), 2-sulfanilamidothiazole (ST) (chemical formula C₉H₉N₃O₂S₂ and CAS-number: 72-14-0), 5-amino-1,2,4-thiadiazole (chemical formula C₈H₇N₃S and CAS-number: 17467-15-1), 2,4-diamino-6-trichloromethyl-s-triazine (CL-1580) (chemical formula C₆H₁₀ClN₅ and CAS-number: 3397-62-4), N-2,5-dichlorophenyl succinanilic acid (DCS) (chemical formula C₁₀H₉Cl₂NO₃ and CAS-number: 1747-60-0), nitroaniline (chemical formula O₂NC₆H₄NH₂ and CAS-number: 88-74-4), and chloroaniline (chemical formula ClC₆H₄NH₂ and CAS-number: 106-47-8), and any mixtures thereof.

The ruminant feed additive composition can be in the form of a premix, and may further comprise other components as known in the art such minerals, vitamins, trace materials, macro minerals, etc.

The term 'premix' as used herein relates to a preferably uniform mixture of one or more micro-ingredients with diluents and / or a carrier. Premixes are used to facilitate uniform dispersion of the micro-ingredients in a larger ruminant feed mix.

The present disclosure also relates to the use of a ruminant feed additive composition according to the present disclosure as described above, to inhibit methane emissions from digestive activities of ruminant animals.

Furthermore, the ruminant feed additive composition according to the present disclosure as described above can be used to additionally mitigate the amount of nitrous oxide (N₂O) and ammonia (NH₄) in the urine of the ruminant.

The present disclosure also relates to a method for inhibiting the production of methane emanating from the digestive activities of ruminant animals, wherein the method comprises the step of orally administering to the ruminant an effective amount of a combination of urea, biuret and N-containing by-products of the biuret production out of urea, one or more nitrate compounds, and one or more other methane inhibition compounds.

The term 'an effective amount' as used herein refers to an amount necessary to obtain a reduction of the methane emissions resulting from the digestive activities of a ruminant animal. It is remarked that this reduction may be achieved by a single dose per day, or by repeated daily doses. It is well understood by a person skilled in the art that the effective amount of the methane inhibitor compounds according to the present disclosure as described above vary depending upon known factors such as the characteristics of the particular composition and its mode and route of administration, the methane inhibitor content of the respective methane inhibitor compounds, and further the age, the health and the weight of the ruminant animal to which the ruminant feed additive composition is administered, as well as the frequency of the treatment. All these factors can be determined by the man skilled in the art in the field of ruminant feed with normal trials or with the usual considerations regarding the intake regime and / or the formulation of the ruminant feed additive composition.

In a possible method according to the present disclosure, the one or more other methane inhibition compounds can be chosen out of the group consisting of
- halogenated methane analogues in the form of halogenated aliphatic compounds with 1 or 2 carbons (also called C₁-C₂ hydrocarbons) and halocarbon compounds,
- nitro compounds,
- plant secondary metabolites (PSM),
- seaweed, algae, lichen, and/or fungi,
- dietary lipid and/or fatty acids,
or any mixture thereof.

In a possible method according to the present disclosure, an effective amount of a ruminant feed additive composition according to the present disclosure as described above is administered to the ruminant animal.

## Claims

1. A ruminant feed additive composition comprising a combination of urea, biuret and N-containing by-products of the biuret production out of urea, and optionally one or more nitrate compounds, to inhibit methane production emanating from the activities of the digestive tract of ruminant animals, the composition comprising one or more other methane inhibition compounds, more in particular chosen out of the group consisting of
- halogenated methane analogues in the form of halogenated aliphatic compounds with 1 or 2 carbons (also called C₁-C₂ hydrocarbons) and halocarbon compounds,
- nitro compounds,
- plant secondary metabolites (PSM),
- seaweed, algae, lichen, and/or fungi,
- dietary lipid and/or fatty acids,
or any combination thereof.

2. A ruminant feed additive composition according to claim 1, wherein the ruminant feed additive composition comprises
- from 60 wt.% to 95 wt.% of urea and biuret in total; and
- from 2 wt.% to 30 wt.% of N-containing by-products,
with wt.% based on the total weight of the ruminant feed additive composition, wherein the amount of urea and biuret more in particular comprises in total
- from 30 wt.% to 60 wt.%, or from 35 wt.% to 55 wt.% of urea, and
- from 30 wt.% to 60 wt.%, or from 35 wt.% to 50 wt.% of biuret,
with wt.% based on the total weight of the ruminant feed additive composition, and wherein the N-containing by-products of the biuret production out of urea more in particular comprise
- from 2.5 wt.% to 8 wt.%, or from 3 wt.% to 6 wt.% of triuret;
- from 0.1 wt.% to 5 wt.%, or from 0.5 wt.% to 3 wt.%, or from 0.8 wt.% to 2 wt.% of ammelide; and
- from 2.5 wt.% to 15 wt.%, from 3 wt.% to 10 wt.%, or from 5 wt.% to 8 wt.% of cyanuric acid,
with wt.% based on the total weight of the ruminant feed additive composition.

3. A ruminant feed additive composition according to claim 1, wherein the nitrate compounds are chosen out of the group consisting of calcium nitrate, magnesium nitrate, ammonium nitrate, potassium nitrate, sodium nitrate, or any combination thereof, wherein the composition more in particular comprises
- from 5 wt.% to 60 wt.%, or from 20 wt.% to 40 wt.% of urea;
- from 2 wt.% to 60 wt.%, or from 20 wt.% to 40 wt.% of biuret;
- from 2 wt.% to 15 wt.% ofN-containing compounds produced during the urea condensation process; and
- from 0.1 wt.% to 50 wt.%, from 21 wt.% to 37 wt.%, or from 23.5 wt.% to 31.5 wt.% of one or more nitrate compounds,
with wt.% based on the total weight of the ruminant feed additive composition, or
- from 20 wt.% to 55 wt.%, or from 35 wt.% to 55 wt.% of urea;
- from 20 wt.% to 50 wt.%, or from 35 wt.% to 50 wt.% of biuret;
- from 5 wt.% to 30 wt.% ofN-containing compounds produced during the urea condensation process; and
- from 0.5 wt.% to 5 wt.% of one or more nitrate compounds,
with wt.% based on the total weight of the ruminant feed additive composition.

4. A ruminant feed additive composition according to claim 2, wherein the ruminant feed additive composition comprises from 20 wt.% to 32 wt.% of calcium nitrate and from 1 wt.% to 5 wt.% of ammonium nitrate, or from 22 wt.% to 29 wt.% of calcium nitrate, and from 1.5 wt.% to 3.0 wt.% or from 1.5 wt.% to 2.5 wt.% of ammonium nitrate, with wt.% based on the total weight of the ruminant feed additive composition.

5. A ruminant feed additive composition according to any one of the preceding claims, wherein the halocarbon compounds are chlorinated and brominated methane analogues chosen out of the group consisting of chloroform, carbon tetrachloride, chloral hydrate, methylene chloride, bromochloromethane (BCM), bromoform, bromodichloromethane, dibromochloromethane, bromochloroacetic acid, dibromoacetic acid, trichloroacetamide, trichloroethyladipate, and iodopropane, or any mixtures thereof.

6. A ruminant feed additive composition according to any one of the preceding claims, wherein the nitro compounds are chosen out of the group consisting of nitroethane (NE), 2-nitroethanol (NEOH), 2-nitro-1-propanol (NPOH) and 3-nitrooxypropanol (3-NOP), or any mixtures thereof.

7. A ruminant feed additive composition according to any one of the preceding claims, wherein the PSM are chosen out of the group consisting of saponins, tannins, flavonoids, essential oils, organosulfur compounds, or any mixtures thereof.

8. A ruminant feed additive composition according to claim 7, wherein the organosulfur compounds are chosen out of the group consisting of thioethers, thioesters, thioacetals, thiols, disulfides, polysulfides, sulfoxides, sulfones, thiosulfinates, sulfimides, sulfoximides, sulfonediimines, thioketones, thioaldehydes, sulfines, sulfenes, thiocarboxylic acids (including dithiocarboxylic acids), sulfonic acids, sulfinic acids, sulfenic acids, sulfonic esters, sulfinic esters, sulfenic esters, sulfonic amides, sulfinic amides, sulfonium compounds, oxosulfonium compounds, sulfonium ylides, oxsulfonium ylides, thiocarbonyl ylides, sulfuranes and persulfuranes, and any combination thereof, or more specifically, chosen out of the group consisting of allicin, ajoene, alliin, allypropyl disulfide, siallyl trisulfide, or any mixtures thereof.

9. A ruminant feed additive composition according to any one of the preceding claims, wherein
- the dietary lipids comprise vegetable oils chosen out of the group consisting of canola oil, palm kernel oil, sunflower oil, soybean oil, coconut oil, linseed oil, or any mixtures thereof, and
- the fatty acids are
• saturated organic fatty acids, more in particular chosen from the group consisting of caproic acid, caprylic acid, capric acid, lauric acid, myristic acid, myrisoleic acid, palmitic acid, palmitoleic acid, stearic acid, linoleic acid, linolenic acid, or any mixtures thereof, and/or
• unsaturated organic fatty acids, more in particular chosen out of the group consisting of propynoic acid, 3-butenoic acid and 2-butynoic acid, ethyl 2-butynoate, or any mixtures thereof.

10. A ruminant feed additive composition according to any one of the preceding claims, wherein the composition comprises one or more pre-biotics, pro-biotics, post-biotics, anti-biotics, and/or bio stimulants, wherein the anti-biotics are more in particular ionophore anti-biotics, particularly chosen out of the group consisting of monensin, lasalocid, narasin, salinomycin, maduramicin, semduramicin, or any mixtures thereof.

11. A ruminant feed additive composition according to any one of the preceding claims, wherein the composition additionally comprises one or more urease and/or nitrification inhibitor compounds in an amount from 0.005 wt.% to 0.5 wt.%, or from 0.03 wt.% to 0.2 wt.%, on the basis of dry matter intake per day per animal.

12. Use of a ruminant feed additive composition according to any one of claims 1 to 11 to inhibit methane emissions from digestive activities of ruminant animals.

13. Use of a ruminant feed additive composition according to claim 12 to additionally mitigate the amount of nitrous oxide (N₂O) and ammonia (NH₄) in the urine of the ruminant animal.

14. A method for inhibiting the production of methane emanating from the digestive activities of ruminant animals, wherein the method comprises the step of orally administering to the ruminant animal an effective amount of a ruminant feed additive composition comprising urea, biuret and N-containing by-products of the biuret production out of urea, optionally one or more nitrate compounds, and one or more other methane reducing or mitigating compounds, more in particular chosen out of the group consisting of
- halogenated methane analogues in the form of halogenated aliphatic compounds with 1 or 2 carbons (also called C₁-C₂ hydrocarbons) and halocarbon compounds,
- nitro compounds,
- plant secondary metabolites (PSM),
- seaweed, algae, lichen, and/or fungi,
- dietary lipid and/or fatty acids,
or any mixtures thereof.

15. Method according to claim 14, wherein an effective amount of a ruminant feed additive composition according to any one of claims 1 to 11 is administered to the ruminant animal.
